# EUROPÄISCHE PATENTSCHRIFT

(11) **EP 3 389 860 B1**
(45) Veröffentlichungstag und Bekanntmachung des Hinweises auf die Patenterteilung: **09.10.2019**
(21) Anmeldenummer: 16822430.1
(22) Anmeldetag: 16.12.2016
(51) Int. Cl.: B01J 33/00, B01J 23/40, B01J 21/04, B01J 23/22, B01J 35/10

(54) **VERFAHREN ZUR VERHINDERUNG DER KONTAMINATION EINES KATALYSATORS ZUR SELEKTIVEN KATALYTISCHEN REDUKTION (SCR) MIT PLATIN**
METHOD FOR PROTECTING A SELECTIVE CATALYTIC REDUCTION (SCR) CATALYST FROM CONTAMINATION WITH PLATINUM
PROCÉDÉ DE PROTECTION D'UN CATALYSEUR À RÉDUCTION CATALYTIQUE SÉLECTIVE (SCR) CONTRE LA CONTAMINATION PAR PALLADIUM

(30) Priorität: 17.12.2015 DE 102015225579
(43) Veröffentlichungstag der Anmeldung: 24.10.2018
(73) Patentinhaber: UMICORE AG & CO. KG, 63457 Hanau-Wolfgang (DE)
(72) Erfinder: HENGST, Christoph, 35510 Butzbach (DE); LOPEZ, Marco, 60439 Frankfurt (DE)
(86) Internationale Anmeldenummer: PCT/EP2016/081334
(87) Internationale Veröffentlichungsnummer: WO 2017/103040

(56) Entgegenhaltungen:
- WO-A1-2013/088132
- WO-A1-2016/146966
- US-A1- 2013 149 207
- Y YUYAO: "Low-concentration supported precious metal catalysts prepared by thermal transport", JOURNAL OF CATALYSIS., Bd. 106, Nr. 1, 1. Juli 1987 (1987-07-01), Seiten 307-312, XP055353530, US ISSN: 0021-9517, DOI: 10.1016/0021-9517(87)90237-5

## Beschreibung

Die vorliegende Erfindung betrifft ein Verfahren zur Verhinderung der Kontamination eines SCR-Katalysators mit Platin in einem Abgasbehandlungssystem durch anströmseitig angeordnete Platin-haltige Komponenten des Abgasbehandlungssystems.

Das Abgas von mit Dieselmotoren betriebenen Kraftfahrzeugen enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, die als "Dieselruß" oder "Russpartikel" bezeichnet werden.

Zur Reinigung dieser Abgase müssen die genannten Bestandteile möglichst vollständig in unschädliche Verbindungen umgewandelt werden, was nur unter Einsatz geeigneter Katalysatoren möglich ist.

So können Kohlenmonoxid (CO), gasförmige Kohlenwasserstoffe (HC) und gegebenenfalls den Russpartikeln anhaftende organische Agglomerate (sog. "Volatile Organic Fraction" VOF) mit Hilfe von Oxidationskatalysatoren oxidativ entfernt werden. Oxidationskatalysatoren sind im Stand der Technik seit langem bekannt und in den verschiedensten Ausführungsformen beschrieben. Zumeist werden die Edelmetalle Platin und/oder Palladium als oxidationskatalytisch aktive Komponenten eingesetzt (siehe zum Beispiel US2011/0206584 A1), aber auch zusätzlich Gold enthaltende Katalysatoren sind schon beschrieben, beispielsweise in der EP1938893A2.

Zur Entfernung von Partikelemissionen aus dem Abgas von Dieselfahrzeugen werden spezielle Partikelfilter eingesetzt, die zur Verbesserung ihrer Eigenschaften mit einer oxidationskatalytisch aktiven Beschichtung versehen sein können. Eine solche Beschichtung dient, wie in der SAE-Schrift SAE 2005-01-1756 ausführlich beschrieben, der Erniedrigung der Aktivierungsenergie für den sauerstoffbasierten Partikelabbrand (Russverbrennung) und somit der Absenkung der Russzündtemperatur auf dem Filter, der Verbesserung des passiven Regenerationsverhaltens durch Oxidation von im Abgas enthaltenen Stickstoffmonoxid zu Stickstoffdioxid und der Unterdrückung von Durchbrüchen von Kohlenwasserstoff- und Kohlenmonoxidemissionen.

Stickoxide aus Abgasen von Dieselmotoren können beispielsweise mittels selektiver katalytischer Reduktion (Selective Catalytic Reduktion, SCR) mit Ammoniak als Reduktionsmittel an einem geeigneten Katalysator, dem SCR-Katalysator, zu unschädlichem Stickstoff umgesetzt werden. Das Reduktionsmittel muss aus einem mitgeführten Zusatztank mittels einer Einspritzdüse vor dem SCR-Katalysator in den Abgasstrang eindosiert werden. Bevorzugt wird aber nicht Ammoniak selbst mitgeführt, sondern eine leicht zu Ammoniak zersetzliche Verbindung wie zum Beispiel Harnstoff oder Ammoniumcarbamat.

Damit die angesprochenen schädlichen Abgaskomponenten im erforderlichen Ausmaß entfernt werden können, müssen die genannten Katalysatoren bzw. Filter in geeigneter Weise zu einem Abgasbehandlungssystem miteinander kombiniert werden.
In bekannten Abgasbehandlungssystemen, die beispielsweise in der WO99/39809 und der WO2009/140989 beschrieben sind, werden in Strömungsrichtung des Abgases zuerst der Oxidationskatalysator, sodann das Dieselpartikelfilter und schließlich der SCR-Katalysator angeordnet. Zwischen Dieselpartikelfilter und SCR-Katalysator befindet sich darüber hinaus noch eine Einspritzvorrichtung zum Zudosieren des Reduktionsmittels. Je nach Anforderung können aber auch Problemlösungen ohne Dieselpartikelfilter in Frage kommen. In diesen Fällen umfasst das Abgasbehandlungssystem in Strömungsrichtung des Abgases zuerst einen Oxidationskatalysator und dann den SCR-Katalysator. Die Einspritzvorrichtung zum Zudosieren des Reduktionsmittels ist in diesem Fall zwischen Oxidationskatalysator und SCR-Katalysator angeordnet.

Beim Betrieb dieser Systeme zeigt sich, dass der Oxidationskatalysator, insbesondere wenn er platinreich ist, bei hohen Temperaturen und abhängig vom λ-Wert Spuren von Platin in die Gasphase abgibt, die mit dem Abgasstrom zum SCR-Katalysator transportiert werden und diesen kontaminieren. Da Platin eine hohe Aktivität zur Oxidation von Ammoniak aufweist, führt das dazu, dass bei Temperaturen oberhalb von ca. 300°C nicht mehr ausreichend Ammoniak für die SCR-Reaktion zur Verfügung steht und der Umsatz von Stickoxiden abnimmt. Außerdem wird eine erhöhte Bildung von Distickstoffmonoxid (N₂O) vornehmlich im Temperaturbereich um 250°C beobachtet. Dieses Phänomen ist zum Beispiel in den SAE-Schriften SAE 2008-01-2488 und SAE 2009-01-0627 beschrieben.

Zur Lösung dieses Problems schlägt die US2011/138777 A1 vor, in das Abgassystem nach dem Oxidationskatalysator und vor dem SCR-Katalysator eine "Platingruppenmetallfalle" anzuordnen, die als wirksame Bestandteile Ceroxid oder ein Perovskit-Material enthält.

Auch die WO2013/088132A1 lehrt, zwischen einem SCR-Katalysator und einem Katalysator, der ein Platingruppenmetall umfasst, ein drittes Katalysatorsubstrat mit einem Material anzuordnen, das flüchtiges Platingruppenmetall zu binden vermag.

Allerdings haben die oben beschriebenen Vorgehensweisen den Nachteil, dass das Abgasbehandlungssystem durch ein zusätzliches Bauteil ergänzt werden muss, was im Hinblick auf den beschränkten Raum im Unterboden eines Fahrzeuges nur schwer zu realisieren ist. Außerdem führt diese Lösung zu höheren Kosten.

Es ist in der WO2013/088133A1 auch bereits vorgeschlagen worden, oxidationskatalytisch aktive Katalysatoren, also Dieseloxidationskatalysatoren oder mit einer oxidationskatalytisch aktiven Beschichtung versehene Partikelfilter, mit einer Materialzone auszustatten, die im Abgasstrom enthaltene Platingruppenmetalle, insbesondere Platin, entfernen kann. Ein zusätzliches Bauteil ist hier also nicht mehr erforderlich. Als "Platingruppenmetallfalle" wird ein Metalloxid vorgeschlagen, das ausgewählt ist aus der Gruppe bestehend aus gegebenenfalls stabilisiertem Aluminiumoxid, amorphem Silicium-Aluminiumoxid, gegebenenfalls stabilisiertem Zirkoniumoxid, Ceroxid, Titanoxid, einem gegebenenfalls stabilisierten Cer-Zirkonium-Mischoxid und Mischungen aus zwei oder mehreren davon. Besonders bevorzugt ist Ceroxid, dem eine besondere Affinität zu Platin zugeschrieben wird.

Gemäß EP2653681A1 wird als "Platinfalle" für ein Dieselpartikelfilter mit oxidationskatalytisch aktiver Beschichtung Palladium, Gold oder Mischungen davon vorgeschlagen. Auch die EP2674584A1 offenbart Palladium, Gold oder Mischungen davon als "Platinfalle".

Aus der WO93/10886A1 ist ein Oxidationskatalysator bekannt, der ein katalytisches Material umfasst, das im Wesentlichen aus einer Kombination von ceroxid und Aluminiumoxid, jeweils mit einer BET-Oberfläche von mindestens 10 m²/g besteht.

US 2013/0149207 A offenbart ein Verfahren zur Verhinderung der Inaktivierung eines SCR-Katalysators durch Kontamination mit volatilisiertem Platingruppenmetall, welches aus einem stromaufwärts gelegenen Oxidationskatalysator stammt und von dort bei hohen Temperaturen während einer Abgasbehandlung losgelöst wird.

Es wurde nun überraschenderweise gefunden, dass physikalische Mischungen aus Ceroxid und Aluminiumoxid besonders aktive Platingruppenmetallfänger, insbesondere Platinfänger, sind.

Die vorliegende Erfindung betrifft demnach ein Verfahren gemäß Anspruch 1 zur Verhinderung der Kontamination des SCR-Katalysators mit Platingruppenmetall in einem Abgasbehandlungssystem, das anströmseitig zum SCR-Katalysator einen Platingruppenmetall enthaltenden Katalysator umfasst, dadurch gekennzeichnet, dass sich vor dem SCR-Katalysator eine Materialzone befindet, die eine physikalische Mischung aus Aluminiumoxid und Ceroxid enthält.

Unter einem ein Platingruppenmetall enthaltenden Katalysator wird im Rahmen der vorliegenden Erfindung insbesondere ein Platingruppenmetall enthaltender Oxidationskatalysator oder ein mit einer Platingruppenmetall enthaltenden oxidationskatalytisch aktiven Beschichtung versehener Partikelfilter verstanden.

Unter Platingruppenmetall wird im Rahmen der vorliegenden Erfindung insbesondere Platin verstanden

Die erfindungsgemäß einzusetzenden Mischungen aus Aluminiumoxid und Ceroxid umfassen Aluminiumoxid insbesondere in Mengen von 10 bis 90 Gew.-%, beispielsweise 30 bis 70 oder 40 bis 60 Gew.-%, bezogen auf das Gewicht der Mischung aus Aluminiumoxid und Ceroxid.

Als Aluminiumoxid wird bevorzugt hochoberflächiges Aluminiumoxid eingesetzt, wie es auf dem Gebiet der Autoabgaskatalyse üblicherweise verwendet wird. Es weist bevorzugt eine spezifische Oberfläche von 50 bis 200 m²/g auf. Das Aluminiumoxid kann auch beispielsweise mittels Lanthan stabilisiert sein und enthält in diesem Fall Lanthanoxid in Mengen von 1 bis 10 Gew.-%, bevorzugt 3 bis 6 Gew.-%, jeweils bezogen auf das Gesamtgewicht des stabilisierten Aluminiumoxids.

Als Ceroxid wir bevorzugt reines Ceroxid eingesetzt, das heißt Ceroxid mit einem Ceroxid-Gehalt von 80 bis 100 Gew.-%. Solche Ceroxide sind dem Fachmann bekannt und am Markt erhältlich.

Die erfindungsgemäß einzusetzenden Mischungen aus Aluminiumoxid und Ceroxid sind physikalische Mischungen. Sie können in Pulverform gemischt und dann in einen Washcoat eingearbeitet werden. Sie können aber auch ohne vorheriges Mischen gleichzeitig oder nacheinander in einen Washcoat eingearbeitet werden.

Die Mischungen aus Aluminiumoxid und Ceroxid werden insbesondere in Mengen von 10 bis 300 g/L, besonders 30 bis 200 g/L, bezogen auf das Volumen des Katalysatorsubstrates, eingesetzt.

Platingruppenmetall enthaltende Katalysatoren im Rahmen der vorliegenden Erfindung sind Durchflusssubstrate oder Filtersubstrate, insbesondere Wandflussfilter, die oxidationskatalytisch aktive Komponenten in Form einer oder mehrerer Beschichtungen tragen. Als oxidationskatalytisch aktive Bestandteile enthalten sie insbesondere Platin, können daneben aber auch noch ein oder mehrere andere Platingruppenelemente, insbesondere Palladium und/oder Rhodium oder beispielsweise Gold enthalten. Die oxidationskatalytisch aktiven Bestandteile liegen auf dem Durchfluss- oder Filtersubstrat auf einem hochoberflächigen, inerten Trägermaterial geträgert vor. Eine besonders bevorzugte oxidationskatalytisch aktive Beschichtung enthält Platin auf Aluminiumoxid.

Das erfindungsgemäße Verfahren kann mit besonderem Vorteil eingesetzt werden, wenn die oxidationskatalytisch aktive Beschichtung "platin-reich" ist, wenn sie also als oxidationskatalytisch aktive Bestandteile ausschließlich Platin enthält oder Platin in Mischung mit anderen Bestandteilen, wobei Platin im Überschuss vorliegt.

Häufig werden Platin alleine oder Mischungen aus Platin und Palladium verwendet, wobei das Gewichtsverhältnis von Platin zu Palladium bei 12:1 bis 4:1 liegt.

Die gesamte Beladung mit oxidationskatalytisch aktiven Metallen liegt bevorzugt bei 35,3 bis 3531,5 g/m³ (1 bis 100 g/ft³) bezogen auf das Volumen der oxidationskatalytisch aktiven Beschichtung.

Neben den oxidationskatalytisch aktiven Komponenten können die Platingruppenmetall enthaltende Katalysatoren im Rahmen vorliegender Erfindung auch Komponenten enthalten, die unter mageren, d.h. sauerstoffreichen Abgasbedingungen Stickoxide chemisch binden und unter fetten, d.h. sauerstoffarmen Abgasbedingungen wieder freisetzen können. Solche Komponenten sind als Stickoxidspeicherkomponenten bekannt und bevorzugt Oxide, Carbonate oder Hydroxide der Alkalimetalle, der Erdalkalimetalle und der Seltenerdmetalle, wobei Barium und Strontium besonders bevorzugt sind.

Dies gilt insbesondere für Platingruppenmetall enthaltende Katalysatoren, die auf Durchflusssubstraten geträgert sind. Somit können solche Oxidationskatalysatoren im Rahmen der vorliegenden Erfindung auch eine LNT-Funktion (Lean NOx Trap) beinhalten.

Die Durchfluss- bzw. Filtersubstrate können aus Metall und insbesondere aus keramischen Materialien bestehen. Bevorzugt bestehen sie aus Cordierit, aus Siliciumcarbid, aus Mullit oder aus Aluminiumtitanat.

Als Dieselpartikelfilter werden bevorzugt Wandflussfiltersubstrate verwendet. Das sind Wabenkörper mit wechselseitig gasdicht verschlossenen An- und Abströmkanälen, die durch poröse Wände begrenzt und voneinander abgetrennt sind. Das in die Anströmkanäle einströmende partikelhaltige Abgas wird durch einen auf der Austrittsseite befindlichen gasdichten Verschlussstopfen zum Durchtritt durch die poröse Wand gezwungen und tritt aus den auf der Anströmseite verschlossenen Abströmkanälen aus dem Wandflussfiltersubstrat wieder aus. Dabei wird Dieselruß aus dem Abgas herausgefiltert.

Die genannten Durchfluss- bzw. Filtersubstrate sind in der Literatur zahlreich beschrieben.

Die eine Mischung aus Aluminiumoxid und Ceroxid enthaltende Materialzone kann auf einem gesonderten Katalysatorsubstrat geträgert sein, das sich zwischen dem Platingruppenmetall enthaltenden Katalysator und dem SCR-Katalysator befindet.

Mit Vorteil befindet sich aber die eine physikalische Mischung aus Aluminiumoxid und Ceroxid enthaltende Materialzone als zusätzliche Materialzone auf dem Platingruppenmetall enthaltenden Katalysator.

Dabei kann diese Materialzone in verschiedener Weise vorliegen. In einer Ausführungsform der vorliegenden Erfindung liegt sie als zusätzliche Schicht auf der homogen über die gesamte Länge des Substrates verteilten oxidationskatalytisch aktiven Beschichtung vor und überdeckt diese ausgehend vom abströmseitig angeordneten Ende des Durchfluss- oder Filtersubstrates mindestens auf einem Teil ihrer Gesamtlänge. Die Materialzone, die die im Abgasstrom enthaltenen Platingruppenmetallspuren entfernt, nimmt in diesem Fall bevorzugt 50% bis 100% der Gesamtlänge des Filtersubstrats ein, bevorzugt 50, 60, 70, 80 oder 90%.

In einer weiteren Ausführungsform sind die oxidationskatalytisch aktive Beschichtung und die eine physikalische Mischung aus Aluminiumoxid und Ceroxid enthaltende Materialzone in getrennten Zonen auf dem Durchfluss- oder Filtersubstrat angeordnet. Im Gegensatz zu der oben beschriebenen Ausführungsform erstreckt sich hier die oxidationskatalytisch aktive Beschichtung nicht über die gesamte Länge des Substrates.

Ist also die gesamte Länge des Substrats L, die Länge der oxidationskatalytisch aktiven Zone L₁ und die Länge der eine Mischung aus Aluminiumoxid und Ceroxid enthaltende Zone L₂, so gilt L=L₁+L₂.

Produktionstechnisch bedingt kann es vorkommen, dass L₁+L₂ nicht genau L entspricht. So kann L₁+L₂ etwas größer als L sein. Dies bedeutet, dass sich die beiden Zonen L₁ und L₂ in geringem Maße überlappen. Andererseits kann L₁+L₂ etwas kleiner als L sein, was bedeutet, dass sich zwischen L₁ und L₂ ein kleiner Spalt befindet, der unbeschichtet ist.

In bevorzugten Ausführungsformen der vorliegenden Erfindung nimmt die eine Mischung aus Aluminiumoxid und Ceroxid enthaltende Materialzone (L₂) 25 bis 67% der Gesamtlänge des Substrats ein. Dementsprechend nimmt die oxidationskatalytisch aktive Zone (L₁) 33 bis 75% der Gesamtlänge des Substrates ein.

Die eine Mischung aus Aluminiumoxid und Ceroxid enthaltende Materialzone ist dabei immer abströmseitig angeordnet, sie weist also im Abgasbehandlungssystem in Richtung des SCR-Katalysators.

In einer bevorzugten Ausführungsform des erfindungsgemäßen Verfahrens umfasst das Abgasbehandlungssystem in Strömungsrichtung des Abgases einen Platingruppenmetall enthaltendes Durchflusssubstrat (Oxidationskatalysator), einen Dieselpartikelfilter und einen SCR-Katalysator. Sofern auch der Dieselpartikelfilter mit einer oxidationskatalytisch aktiven Beschichtung versehen ist, befindet sich die Mischung aus Aluminiumoxid und Ceroxid bevorzugt auf dem Dieselpartikelfilter. Ansonsten kann sie sich auch auf dem Platingruppenmetall enthaltenden Durchflusssubstrat (Oxidationskatalysator), befinden.

In Ausführungsformen der vorliegenden Erfindung sind SCR-Katalysatoren konventionelle Produkte, die zahlreich beschrieben und dem Fachmann bekannt sind. Es handelt sich üblicherweise um Durchflusswabenkörper, auf die die katalytisch wirksamen Bestandteile in Form einer Beschichtung aufgebracht sind.

Es eignen sich SCR-Katalysatoren auf Basis von Vanadiumoxid oder auf Basis Vanadium-freier Mischoxide ebenso, wie solche auf Zeolith-Basis. SCR-Katalysatoren auf Zeolith-Basis sind bevorzugt, insbesondere solche, die mit Eisen und/oder Kupfer ausgetauscht sind. Besonders bevorzugte SCR-Katalysatoren dieses Typs sind Kupfer- und/oder Eisen-haltiger Zeolithe vom Chabazit- und Levyne-Typ.

In einer weiteren Ausführungsform des erfindungsgemäßen Verfahrens umfasst das Abgasbehandlungssystem in Strömungsrichtung des Abgases ein Platingruppenmetall enthaltendes Durchflusssubstrat (Oxidationskatalysator), das eine Mischung aus Aluminiumoxid und Ceroxid umfasst, sowie einen Dieselpartikelfilter, auf den ein SCR-Katalysator in Form einer Beschichtung aufgetragen ist. Unter Umständen kann dieses System abströmseitig zum Dieselpartikelfilter auch noch einen weiteren SCR-Katalysator umfassen.

Schließlich sind auch Ausführungsformen des erfindungsgemäßen Verfahrens denkbar, in denen das Abgasbehandlungssystem in Strömungsrichtung des Abgases ein Platingruppenmetall enthaltendes Durchflusssubstrat (Oxidationskatalysator), sowie abströmseitig dazu einen SCR-Katalysator umfasst, also kein Dieselpartikelfilter aufweist.

Die Aufbringung der katalytisch aktiven Beschichtung auf Durchflusswabenkörper und Filterkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff), die für diese Abgasreinigungsaggregate aus dem Stand der Technik hinreichend bekannt sind.

Das erfindungsgemäße Dieselpartikelfilter eignet sich in hervorragender Weise zum nachhaltigen Schutz von SCR-Katalysatoren vor Kontamination mit Platin und damit vor Aktivitätsverlust. Es hat sich insbesondere gezeigt, dass das erfindungsgemäße Verfahren die Kontamination des SCR-Katalysators mit Platingruppenmetall effektiv und in wirtschaftlich vorteilhafter Weise zu verhindern vermag. Dies zeigt sich eindrucksvoll in den nachstehenden Beispielen.

### Beispiele

Ein konventioneller Oxidationskatalysator, der eine Beladung von 706,3 g/ m³ (20 g/ft³) auf Aluminiumoxid auf einem herkömmlichen Durchflusssubstrat ist, wurde mit verschiedenen Aluminiumoxid/Ceroxid-Mischungen als Platinfänger wie in Tabelle 1 angegeben kombiniert. Dazu wurde jeweils ein Katalysator mit der entsprechenden Menge an Platinfänger beschichtet und hinter den Oxidationskatalysator plaziert. Die Längen von Oxidationskatalysator und Platinfänger wurden so gewählt, dass 67% der Gesamtlänge auf den Oxidationskatalysator und 33% der Gesamtlänge auf den Platinfänger entfielen.

Zur Bestimmung der Platin-Migration der Oxidationskatalysatoren wurden diese in frischem Zustand in einer üblichen Modellgasanlage mit isothermem Reaktor bei einer konstanten Temperatur von 650°C über 18 Stunden mit einem Modellgas folgender Zusammensetzung beaufschlagt:

| | |
|---|---|
| CO | 71 ppm |
| NO | 820 ppm |
| O₂ | 6,3 Vol.-% |
| CO₂ | 8,9 Vol.-% |
| H₂O | 11 Vol.-% bei den 18 Stunden dauernden Messungen und 5 Vol.-% bei den 60 Stunden dauernden Messungen |
| N₂ | Balance |

Das abströmseitig den jeweiligen Oxidatiobskatalysator verlassende Gas wurde durch ein mit einem SCR Katalysator vom Eisen-ß-Zeolith-Typ beschichtetes Durchflusssubstrat der Länge 5,1 cm (2") geführt. Sodann wurde für jeden Katalysator die Menge des im SCR-Katalysator gebundenen Platins bestimmt. Dazu wurde ein Bohrkern des Katalysators in einem Tiegel mittels NiS-Dokimasie ausgeschmolzen und schließlich das Platin mittels ICP-OES bestimmt.

Zum Vergleich wurden reines Aluminiumoxid und reines Ceroxid vermessen. Die folgenden Ergebnisse wurden erhalten:

| Beispiel | Zusammensetzung [Gew.-%] | Menge an Platin [ppm] |
|---|---|---|
| Beispiel 1 | 90 Aluminiumoxid 1 | < 0,2 |
| | + | |
| | 10 Ceroxid 1 | |
| Beispiel 2 | 70 Aluminiumoxid 1 | < 0,2 |
| | + | |
| | 30 Ceroxid 1 | |
| Beispiel 3 | 70 Aluminiumoxid 1 | < 0,2 |
| | + | |
| | 30 Ceroxid 1 | |
| Vergleichsbeispiel 1 | Ceroxid 1 | 0,2 |
| Vergleichsbeispiel 2 | Ceroxid 2 | 0,3 |
| Vergleichsbeispiel 3 | Aluminiumoxid 2 | 1,8 |
| Vergleichsbeispiel 4 | Aluminiumoxid 3 | 2,4 |

Aluminiumoxid 1 ist ein handelsübliches reines Aluminiumoxid
Aluminiumoxid 2 ist ein handelsübliches mit 4 Gew.-% Lanthan dotiertes mesoporöses
Aluminiumoxid des Herstellers 1
Aluminiumoxid 3 ist ein handelsübliches mit 4 Gew.-% Lanthan dotiertes mesoporöses
Aluminiumoxid des Herstellers 2
Ceroxid 1 ist ein handelsübliches reines Ceroxid des Herstellers 3
Ceroxid 2 ist ein handelsübliches reines Ceroxid des Herstellers 4

Die Ergebnisse zeigen, dass Ceroxid zumindest bis zu 90 Gew.-% durch das billigere Aluminiumoxid ersetzt werden kann, ohne dass sich die Wirkung verschlechtert.

## Patentansprüche

1. Verfahren zur Verhinderung der Kontamination eines SCR-Katalysators mit Platingruppenmetall in einem Abgasbehandlungssystem, das anströmseitig zum SCR-Katalysator einen Platingruppenmetall enthaltenden Katalysator umfasst, wobei der Platingruppenmetall enthaltende Katalysator ein Durchflusssubstrat oder Filtersubstrat ist, das oxidationskatalytisch aktive Komponenten in Form einer oder mehrerer Beschichtungen trägt, **dadurch gekennzeichnet, dass** sich vor dem SCR-Katalysator eine Materialzone befindet, die eine physikalische Mischung aus Aluminiumoxid und Ceroxid enthält.

2. Verfahren nach Anspruch 1, **dadurch gekennzeichnet, dass** der Platingruppenmetall enthaltende Katalysator ein Platingruppenmetall enthaltender Oxidationskatalysator oder ein mit einer Platingruppenmetall enthaltenden oxidationskatalytisch aktiven Beschichtung versehener Partikelfilter ist.

3. Verfahren nach Anspruch 1 oder 2, **dadurch gekennzeichnet, dass** das Platingruppenmetall Platin ist.

4. Verfahren nach einem oder mehreren der Ansprüche 1 bis 3, **dadurch gekennzeichnet, dass** die Mischung aus Aluminiumoxid und Ceroxid Aluminiumoxid in Mengen von 10 bis 90 Gew.-%, bezogen auf das Gewicht der Mischung aus Aluminiumoxid und Ceroxid. umfasst.

5. Verfahren nach einem oder mehreren der Ansprüche 1 bis 4, **dadurch gekennzeichnet, dass** sich die Materialzone, die eine Mischung aus Aluminiumoxid und Ceroxid enthält, auf einem Katalysatorsubstrat geträgert ist, das sich zwischen dem Platingruppenmetall enthaltenden Katalysator und dem SCR-Katalysator befindet.

6. Verfahren nach einem oder mehreren der Ansprüche 1 bis 4, **dadurch gekennzeichnet, dass** sich die Materialzone, die eine Mischung aus Aluminiumoxid und Ceroxid enthält, als zusätzliche Materialzone auf dem Platingruppenmetall enthaltenden Katalysator befindet.

7. Verfahren nach Anspruch 6, **dadurch gekennzeichnet, dass** sich die Materialzone, die eine Mischung aus Aluminiumoxid und Ceroxid enthält, als zusätzliche Schicht auf der homogen über die gesamte Länge des Durchflusssubstrates oder Filtersubstrates verteilte, oxidationskatalytisch aktive Komponenten tragende, Beschichtung vorliegt und diese ausgehend vom abströmseitig angeordneten Ende des Platingruppenmetall enthaltenden Katalysators mindestens auf einem Teil ihrer Gesamtlänge überdeckt.

8. Verfahren nach Anspruch 6, **dadurch gekennzeichnet, dass** die oxidationskatalytisch aktive Komponenten tragende Beschichtung und die Materialzone, die eine Mischung aus Aluminiumoxid und Ceroxid enthält, in getrennten Zonen auf dem Platingruppenmetall enthaltenden Katalysator vorliegen.

9. Verfahren nach Anspruch 8, **dadurch gekennzeichnet, dass** die Materialzone, die eine Mischung aus Aluminiumoxid und Ceroxid enthält, 25 bis 67% der Gesamtlänge des Platingruppenmetall enthaltenden Katalysators einnimmt.

## Claims

1. A method for protecting an SCR catalyst from contamination with platinum-group metal in an exhaust treatment system comprising a catalyst containing platinum group-metal upstream of the SCR catalyst, wherein the catalyst containing platinum-group metal is a flow-through substrate or filter substrate that bears oxidation-catalytically active components in the form of one or more coatings, **characterized in that** a material zone is located upstream of the SCR catalyst, which material zone comprises a physical mixture of aluminum oxide and cerium oxide.

2. The method according to claim 1, **characterized in that** the catalyst containing platinum-group metal is an oxidation catalyst containing platinum group-metal or a particulate filter provided with an oxidation-catalytically active coating that contains platinum-group metal.

3. The method according to claim 1 or 2, **characterized in that** the platinum-group metal is platinum.

4. The method according to one or more of claims 1 to 3, **characterized in that** the mixture of aluminum oxide and cerium oxide comprises aluminum oxide in amounts of 10 to 90 % by weight relative to the weight of the mixture of aluminum oxide and cerium oxide.

5. The method according to one or more of claims 1 to 4, **characterized in that** the material zone that contains a mixture of aluminum oxide and cerium oxide is borne on a catalyst substrate that is located between the catalyst containing platinum-group metal and the SCR catalyst.

6. The method according to one or more of claims 1 to 4, **characterized in that** the material zone that contains a mixture of aluminum oxide and cerium oxide is located as an additional material zone on the catalyst containing platinum-group metal.

7. The method according to claim 6, **characterized in that** the material zone that contains a mixture of aluminum oxide and cerium oxide is present as an additional layer on the oxidation-catalytically active, component-bearing coating distributed homogeneously over the entire length of the flow-through substrate or filter substrate and covers it, at least on a part of its entire length, starting from the end of the catalyst containing platinum-group metal arranged downstream.

8. The method according to claim 6, **characterized in that** the oxidation-catalytically active component-bearing coating and the material zone that contains a mixture of aluminum oxide and cerium oxide are present in separate zones on the catalyst containing platinum-group metal.

9. The method according to claim 8, **characterized in that** the material zone that contains a mixture of aluminum oxide and cerium oxide takes up 25 to 67 % of the entire length of the catalyst containing platinum-group metal.

## Revendications

1. Procédé pour empêcher la contamination d'un catalyseur de SCR (réduction catalytique sélective) présentant un métal du groupe du platine dans un système de traitement de gaz d'échappement, qui comprend côté admission par rapport au catalyseur de SCR un catalyseur contenant un métal du groupe du platine, le catalyseur contenant un métal du groupe du platine étant un substrat à écoulement ou un substrat de filtre qui porte des composants actifs en catalyse par oxydation sous forme d'un ou de plusieurs revêtements, **caractérisé en ce que** le catalyseur de SCR est précédé d'une zone de matériau qui contient un mélange physique d'oxyde d'aluminium et d'oxyde de cérium.

2. Procédé selon la revendication 1, **caractérisé en ce que** le catalyseur contenant un métal du groupe du platine est un catalyseur d'oxydation contenant un métal du groupe du platine ou un filtre à particules pourvu d'un revêtement actif en catalyse par oxydation contenant un métal du groupe du platine.

3. Procédé selon la revendication 1 ou 2, **caractérisé en ce que** le métal du groupe du platine est le platine.

4. Procédé selon l'une ou plusieurs des revendications 1 à 3, **caractérisé en ce que** le mélange d'oxyde d'aluminium et d'oxyde de cérium comprend de l'oxyde d'aluminium en des quantités de 10 à 90 % en poids, par rapport au poids du mélange d'oxyde d'aluminium et d'oxyde de cérium.

5. Procédé selon l'une ou plusieurs des revendications 1 à 4, **caractérisé en ce que** la zone de matériau, qui contient un mélange d'oxyde d'aluminium et d'oxyde de cérium, est supportée sur un substrat catalytique qui se situe entre le catalyseur contenant un métal du groupe du platine et le catalyseur de SCR.

6. Procédé selon l'une ou plusieurs des revendications 1 à 4, **caractérisé en ce que** la zone de matériau, qui contient un mélange d'oxyde d'aluminium et d'oxyde de cérium, se situe comme zone de matériau supplémentaire sur le catalyseur contenant un métal du groupe du platine.

7. Procédé selon la revendication 6, **caractérisé en ce que** la zone de matériau, qui contient un mélange d'oxyde d'aluminium et d'oxyde de cérium, se trouve sous forme de couche supplémentaire sur le revêtement réparti de manière homogène sur toute la longueur du substrat à écoulement ou du substrat de filtre et portant des composants actifs en catalyse par oxydation et recouvre celui-ci, partant de l'extrémité agencée côté sortie du catalyseur contenant un métal du groupe du platine, au moins sur une partie de sa longueur totale.

8. Procédé selon la revendication 6, **caractérisé en ce que** le revêtement portant des composants actifs en catalyse par oxydation et la zone de matériau, qui contient un mélange d'oxyde d'aluminium et d'oxyde de cérium, se trouvent dans des zones séparées sur le catalyseur contenant un métal du groupe du platine.

9. Procédé selon la revendication 8, **caractérisé en ce que** la zone de matériau, qui contient un mélange d'oxyde d'aluminium et d'oxyde de cérium, occupe 25 à 67 % de la longueur totale du catalyseur contenant un métal du groupe du platine.
